Europäisches Patentamt

European Patent Office

Office européen des brevets

(11) Veröffentlichungsnummer: **0 422 371 A1**

## (12) EUROPÄISCHE PATENTANMELDUNG

(21) Anmeldenummer: 90116405.3

(22) Anmeldetag: 27.08.90

(51) Int. Cl.5: **G02F 1/09**, G02B 6/42

(30) Priorität: 20.09.89 DE 3931380

(43) Veröffentlichungstag der Anmeldung:
17.04.91 Patentblatt 91/16

(84) Benannte Vertragsstaaten:
DE FR GB IT NL

(71) Anmelder: Siemens Aktiengesellschaft
Wittelsbacherplatz 2
W-8000 München 2(DE)

(72) Erfinder: Drögemüller, Karsten, Dipl.-Ing.
Heubergstrasse 7a
W-8152 Feldkirchen-Westerham(DE)
Erfinder: Klement, Ekkehard, Dr.
Akilindastrasse 31
W-8032 Gräfelfing(DE)

(54) Optische Anordnung zum rückwirkungsfreien Einkoppeln der von einem Halbleiterlaser abgestrahlten Laserstrahlung in eine optische Faser.

(57) 1 Bei einer optischen Anordnung der genannten Art soll eine Sperrdämpfung von mindestens -70 dB erreichbar sein, so daß sie für optische Heterodynsysteme verwendbar ist.

2 Dazu wird eine Anordnung verwendet, die eine erste optische Linse (3) und einen in Ausbreitungsrichtung (R) der Laserstrahlung nachgeordneten optischen Isolator (5), bestehend aus einem Faraday-Dreher (6) und einem Polarisator (7), aufweist. Zwischen der ersten Linse (3) und dem einen optischen Isolator (5) ist ein zweiter optischer Isolator (9), bestehend aus einem zweiten Faraday-Dreher (10) und einem zweiten Polarisator (11) mit einer im Vergleich zum einen Polarisator (7) höheren Sperrdämpfung, angeordnet.

3 Anwendung für Lasermodule für optische Heterodyn-Systeme.

FIG 1

## OPTISCHE ANORDNUNG ZUM RÜCKWIRKUNGSFREIEN EINKOPPELN DER VON EINEM HALBLEITERLASER ABGESTRAHLTEN LASERSTRAHLUNG IN EINE OPTISCHE FASER

Die Erfindung betrifft eine optische Anordnung zum rückwirkungsfreien Einkoppeln der von einem Halbleiterlaser abgestrahlten Laserstrahlung in eine optische Faser nach dem Oberbegriff des Patentanspruchs 1.

Eine Anordnung der genannten Art ist aus der EP 0275 068 A2 (GR 87 P 1010) bekannt. Mit dieser Anordnung läßt sich eine Sperrdämpfung von etwa -35 dB erreichen. Optische Übertragungssysteme, die nach dem Heterodynsystem arbeiten, benotigen extrem monochromatische und frequenzstabile Lasersender und Lokaloszillatoren. Laser, deren Spektrallinie durch Rückwirkung verbreitert ist, können hierfür nicht eingesetzt werden (siehe dazu R.W. Tkach and A.R.Chraplyvy: Linewith broadening and mode splitting due to weak feedback in single-frequency 1.5 µm lasers. Conf.on Fiber Comm.(OFC)'86, Atlanta,M15, 1986 European Conf. on Optical Comm. (ECOC)'86, Barcelona 1986, Vol.II,pp 11-16, European Conf.on Optical Comm. (ECOC)'87, Vol. I, pp. 349, Sept. 1987. Hier ist eine Unterdrückung der Rückwirkung und damit eine Sperrdämpfung von mindestens -70 dB erforderlich.

Aufgabe der Erfindung ist es, eine optische Anordnung zum rückwirkungsfreien Einkoppeln der von einem Halbleiterlaser abgestrahlten Laserstrahlung in eine optische Faser anzugeben, mit der eine Sperrdämpfung von mindestens -70 dB erreichbar ist.

Diese Aufgabe wird mit einer Anordnung der eingangs genannten Art gelöst, welche die im kennzeichnenden Teil des Patentanspruchs 1 angegebenen Merkmale aufweist.

Durch die erfindungsgemäße Anordnung ist vorteilhafterweise ein einfacher und kompakter Doppelisolator sehr kurzer Baulänge geschaffen, der in einen Halbleiterlasermodul eingebaut und für optische Heterodynsysteme eingesetzt werden kann.

Es sei darauf hingewiesen, daß aus M.Shirasaki et al., "Optical Isolator for Single Mode FiBer", European Conf. on Optical Communication (ECOC) '86, Barcelona 1986, Vol II, pp. 11-16 ein zwischen zwei Faserenden anzuordnender Doppelisolator bekannt ist, der aus zwei in Reihe geschalteten optischen Isolatoren besteht. Jeder dieser Isolatoren besteht aus einem Faraday-Dreher und zwei optischen Polarisatoren in Form von doppelbrechenden Keilplatten, die so zueinander angeordnet sind, daß die Winkelablenkung, die der ordentliche Strahl in Senderichtung durch Brechung am Keil erfährt, vom zweiten Keil kompensiert wird.

Die erfindungsgemäße Anordnung benötigt demgegenüber nur zwei Polarisatoren, von denen der näher am Halbleiterlaser angeordnete zweite Polarisator eine höhere Sperrdämpfung haben muß, als der eine Polarisator, für den eine Sperrdämpfung genügt, die eine herkömmliche Anordnung mit nur einem optischen Isolator erfordert.

Gemäß einer vorteilhaften Ausgestaltung der erfindungsgemäßen Anordnung ist in dem zweiten Faraday-Dreher eine dritte optische Linse ausgebildet (Anspruch 2), die vorteilhafterweise eine Plankonvexlinse ist (Anspruch 3). Durch diese Ausgestaltung ist eine dreilinsige Koppeloptik gegeben, die größere Justiertoleranzen der Einzelkomponenten bezüglich des Einkoppelwirkungsgrades zuläßt und eine einfache Fertigungsmontage des Moduls ermöglicht.

Vorteilhaft ist es bei der erfindungsgemäßen Anordnung auch, wenn der zweite Polarisator aus einem Keil aus doppelbrechendem Material besteht (Anspruch 4). Dieser Keil, der eine hohe Sperrdämpfung gewährleistet und einfach in der Herstellung und sehr kompakt ist, erzeugt zwar durch Brechung des gesendeten Lichts einen Winkelfehler dieses Lichts, dieser Fehler kann jedoch vorteilhafterweise durch eine Justage der anzukoppelnden Faser vollständig kompensiert werden. Ein zusätzlicher Einkoppelverlust zwischen Laser und Faser wird damit vermieden. Durch die Nachjustierung der Faser kann auf einen weiteren Keil, der den Winkelfehler kompensieren müßte, verzichtet werden. Die Kosten für die Polarisatoren werden dadurch minimiert.

Die Erfindung wird in der nachfolgenden Beschreibung anhand der beigefügten Figuren beispielhaft näher erläutert. Es zeigen schematisch:

Figur 1 eine erfindungsgemäße Anordnung mit zweilinsiger Koppeloptik,

Figur 2 eine erfindungsgemäße Anordnung mit dreilinsiger Koppeloptik und

Figur 3 eine Anordnung nach Figur 1, bei welcher der zweite Polarisator aus einer Keilplatte besteht und die angekoppelte Faser seitlich verschoben justiert ist.

Bei allen dargestellten Anordnungen wird die vom Halbleiterlaser 1 divergent abgestrahlte linear polarisierte Laserstrahlung von der ersten Linse 3, beispielseise einer Kugellinse aus Glas, kollimiert und dann von der zweiten Linse 4 oder von einer dritten Linse 12 und der zweiten Linse 4 auf ein Ende 81 der Faser 8 fokussiert, die beispielsweise eine Monomodefaser ist.

Zwischen der ersten Linse 3 und dem Ende 81 der Faser 8 sind in Ausbreitungsrichtung R der Laserstrahlung hintereinander zunächst der zweite optische Isolator 9 und dann der eine optische Isolator 5 im Strahlengang der Laserstrahlung angeordnet.

Der eine optische Isolator 5 besteht aus dem einen Faraday-Dreher 6 und dem zwischen diesem und der Faser 8 angeordneten einen Polarisator 7. Der eine Faraday-Dreher 6, der die Polarisationsebene des zugeführten linear polarisierten Lichts um 45° dreht, besteht aus einer die zweite Linse 4 bildenden Plankonvexlinse aus Ferrit, beispielsweise YIG, deren konvexe Seite 40 dem Halbleiterlaser 1 zugekehrt ist und die von einem Ringmagneten 61 umgeben ist.

Der eine Polarisator 7 kann beispielsweise aus einer im Winkel schräg zur Ausbreitungsrichtung R angeordneten und in einem Block 71 aus Glas eingebetteten dielektrischen Vielfachschicht und damit aus einem Interferenzpolarisator bestehen.

Der zweite optische Isolator 9 besteht aus dem zweiten Faraday-Dreher 10 und dem zwischen diesem und dem einen Isolator 5 angeordneten zweiten Polarisator 11. Der zweite Faraday-Dreher 10 besteht aus einer Scheibe 12 aus Ferrit, beispielsweise YIG, die von einem Ringmagneten 101 umgeben ist.

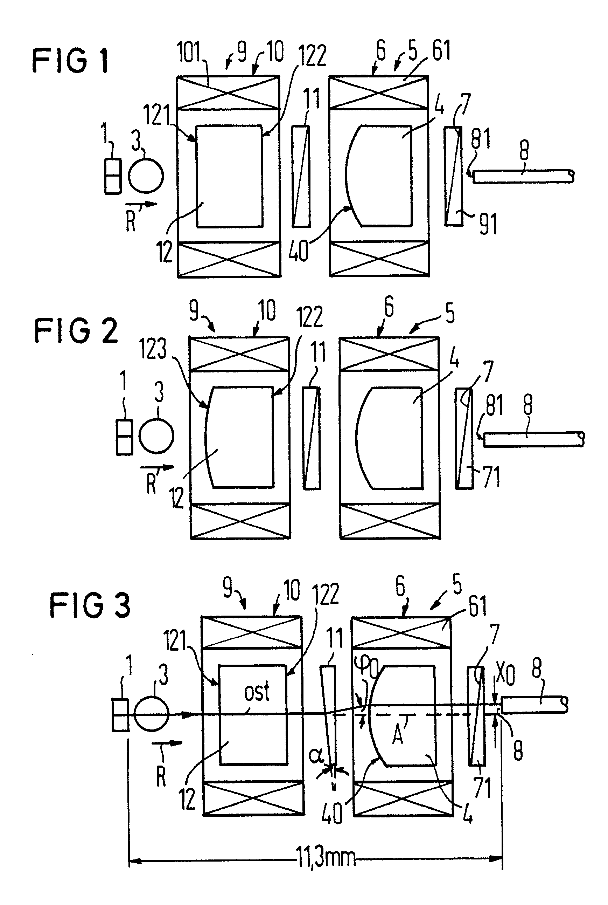

Beim Ausführungsbeispiel nach Figur 1 weist die Scheibe 12 parallele ebene Flachseiten 121 und 122 auf, während diese Scheibe 12 bei dem Ausführungsbeispiel nach Figur 2 als Plankonvexlinse ausgebildet ist, deren konvexe Seite 123 dem Halbleiterlaser 1 zugekehrt ist.

Bei dem Ausführungsbeispiel nach Figur 2 bilden die erste Linse 3 und die dritte Linse 12 zweiten des Faraday-Drehers 30 vorzugsweise ein konfokales Linsensystem, das den Laserfleck nicht direkt auf die Faser abbildet, sondern einen größeren Zwischenfleck erzeugt. Mit der zweiten Linse 4 des einen Faraday-Drehers 6 wird ein virtueller Fleck erzeugt, der dem Zwischenfleck angepaßt ist. Durch Vergrößerung des Faserflecks mit Hilfe des virtuellen Zwischenbildes wird eine Verbesserung der Justiertoleranzen erreicht.

Die beiden Faraday-Dreher 6 und 10 sind so angeordnet, daß sie jeweils die Ebene des linear polarisierten Lichts um 45° und zusammen um 90° drehen.

Der zweite Polarisator 11 muß im Vergleich zum einen Polarisator 7 eine höhere Sperrdämpfung aufweisen, wobei der eine Polarisator 7 einer Bedingung genügen muß, die ein Polarisator bei einem herkömmlichen Einfachisolator erfüllen muß (siehe dazu T. Chikama, H. Onaka, T. Kiyonaga, M. Suyama and H. Kuwahara: An Optical FSK Transmission Experiment Using Solitary DFB Lasers for Broad-Band Distributed Networks. European Conf. on Optical Communication (ECOC) '87, vol. I, pp. 349, Sept. 1987). Nach dieser Bedingung muß der Transmissionsgrad $\tau_1$ des einen Polarisators 7 für das von der Faser 8 zurückkommende und unschädlich zu machende linear polarisierte Licht für eine Polarisationskomponente, für die der Polarisator 7 sperrend wirkt, kleiner als das Auslöschungsvermögen k des Ferritmaterials des einen Faraday-Drehers 6 sein. Das Auslöschungsvermögen k des Ferritmaterials bestimmt den Anteil, der von einer Polarisationskonponente durch Spannungsdoppelbrechung des Ferritmaterials in die zu dieser Komponente orthogonale Polarisationsebene gestreut wird. Die zu der einen Polarisationskomponente, für die der eine Polarisator 7 sperrend wirkt, orthogonale andere Polarisationskomponente geht durch den einen Polarisator 7 ungehindert hindurch. Von dieser anderen Komponente wird der durch k bestimmte Anteil in die Polarisationsebene der einen Polarisationskomponente gestreut. Damit hinter dem einen Faraday-Dreher 6 das von der Faser 8 zurückkommmende Licht nicht wesentlich größer als der durch k bestimmte Anteil ist, muß der Transmissionsgrad $\tau_1$ kleiner als k sein.

Der zweite Polarisator 11 wirkt für die andere Polarisationskomponente sperrend, während die eine Polarisationskomponente unhindert hindurchgeht. Vom einen Faraday-Dreher 6 her gelangt der von der anderen Polarisationskomponente in die Polarisationsebene der einen Polarisationskomponente gestreute und durch k bestimmte Anteil durch den zweiten Polarisator 11 hindurch in das Ferritmaterial des zweiten Faraday-Drehers 10. In diesem Material wird ein durch das Auslöschungsvermogen $k'$ dieses Ferritmaterials bestimmter Anteil des durch k bestimm ten Anteils in die Polarisationsebene der anderen Polarisationskomponente gestreut. Aus der von der Faser 8 zurückkommenden Lichtleistung erhält man hinter dem zweiten Faraday-Dreher 10 somit einen durch Streuung in den Ferritmaterialen hervorgerufenen Anteil, der durch $k \cdot k'$ bestimmt ist. Damit das von der Faserr 8 zurückkommende Licht hinter dem zweiten Faraday-Dreher 10 nicht größer als das durch Streuung im Ferritmaterial der beiden Dreher 6 und 10 hervorgerufene Licht ist, muß mit $k \ll 1$ und $k' \ll 1$ der Transmissionsgrad $\tau_2$ des zweiten Polarisators 11 für die andere Polarisationskomponente, für die dieser Polarisator 11 sperrend wirkt, kleiner als $k \cdot k'$ sein. Danach ist es notwendig, daß der zweite Polarisator 11 eine größere Sperrdämpfung als der eine Polarisator 6 hat, wobei für den einen Polarisator 6 eine Sperrdämpfung genügt, die ein Polarisator bei einem herkömmlichen Einfachisolator haben muß. Bei einem Auslöschungsvermögen für YIG-Material mit k = -37 dB muß $\tau_2 \ll -74$ dB sein.

Bei richtiger Dimensionierung der beiden Polarisatoren ist bei YIG-Material das in den TE-Mode des Halbleiterlasers rückgekoppelte Licht um den Faktor $k^2 = -74$ dB gedämpft, bei einem Einfachisolator wird es dagegen nur um den Faktor k = -37 dB unterdrückt.

Da der eine Polarisator 7 vorteilhafterweise nur den Anforderungen eines Einfachisolators genügen muß, können auch alle dort üblichen Isolatoren verwendet werden, beispielsweise Interferenzpolarisatoren oder ein Plättchen aus doppelbrechendem Material, beispielsweise aus Kalkspat.

Der zweite Polarisator 11 befindet sich im kollimierten Strahlengang zwischen zwei Linsen. In diesem Bereich ist der Fleckradius der Strahlung groß gegenüber der Wellenlänge. Hier reicht eine geringe Winkelablenkung des reflektierten Gaußstrahls aus, um nur noch schwach in den Laser zurückzukoppeln. Als Polarisatoren, die eine Winkelablenkung erzeugen, kommen z.B. Interferenzpolarisatoren, Rochon-Polarisatoren oder auch doppelbrechende Keile infrage.

Interferenzpolarisatoren sind zwar kostengünstig und einfach herstellbar, sie haben jedoch eine zu geringe Sperrdämpfung von mehr als -40 dB. Selbst wenn zwei solche Polariatoren in Reihe angeordnet sind, ist die Sperrdämpfung nicht besser als -40 dB. Bei drei hintereinander geschalteten Interferenz-Polarisatoren treten zu hohe Transmissionsverluste auf.

Rochonpolarisatoren und vergleichbare Polarisatoren dieser Art sind kompakt und zeigen zwar ein ausgezeichnetes Sperrverhalten, ihre Herstellung ist jedoch sehr aufwendig. Es müssen zwei doppelbrechende Keile mit unterschiedlichem Achsenschnitt zusammengefügt werden. Der große Herstellungsaufwand führt zu einem entsprechend hohen Stückpreis.

Wesentlich niedrigere Kosten verursacht ein doppelbrechender Keil. Solche Keile haben eine ausreichend hohe Sperrdämpfung. Bei ihnen werden ordentlicher und außerordentlicher Strahl durch eine unterschiedlich starke Winkelablenkung voneinander getrennt. Der einzige Nachteil besteht in der unerwünschten Winkelablenkung des ordentlichen Strahls, der in die Faser einzukoppeln ist.

Es wurde gefunden, daß dieser Nachteil durch eine geeignete Justage der Faser 8 ausgeglichen werden kann und kein Einkoppelverlust entsteht, wenn der Ablenkwinkel des ordentlichen Strahls klein ist.

Beim Ausführungsbeispiel nach Figur 3 besteht der zweite Polarisator 11 aus einem solchen Keil aus Kalkspat.

Bei einer konkreten Ausführung des Beispiels nach Figur 3 besteht die erste Linse 3 aus einer Kugellinse aus Glas mit einer Brennweite $f_1$ = 0,55 mm. Der Keil aus Kalkspat hat einen Keilwinkel $\alpha$ = 2,81°. Dieser Keil lenkt den ordentlichen Strahl oST um einen Winkel $\phi_0$ = 1,34° ab und die Winkeldifferenz $\Delta\phi$ zwischen dem abgelenkten ordentlichen Strahl oSt und dem abgelenkten außerordentlichen Strahl beträgt 0,45°. Die zweite Linse 4 hat eine Brennweite $f_2$ = 2,5mm. Der im Winkel $\phi_0$ abgelenkte ordentliche Strahl oSt wird von der zweiten Linse 4 in einen zur optischen Achse A der Anordnung parallelen aber um $x_0 = f_2 \cdot \tan \phi_0$ = 58,6 $\mu$m gegen diese Achse A versetzten Strahl transformiert. Dieser Achsversatz $x_0$ wird durch einen entsprechenden Achsversatz der Faser 8 aus der Achse A ausgeglichen. Diese konkrete Ausführung hat eine Sperrdämpfung von mindestens -74 dB.

Weil die Dicke des Keils keine Rolle spielt, kann dieser Polarisator 11 sehr dünn, beispielsweise 0,5 mm ausgeführt werden. Dies trägt mit zur vorteilhaft kurzen Baulänge der Anordnung von weniger als 12 mm bei.

Ein Polarisator 11 in Form eines Keils aus doppelbrechendem Material kann auch bei dem Ausführungsbeispiel nach Figur 2 verwendet werden.

Eine erfindungsgemäße Anordnung wirkt wie folgt:

Die vom Halbleiterlaser 1 divergent abgestrahlte und beispielsweise im TE-Mode linear polarisierte Laserstrahlung wird von der ersten Linse 3 kollimiert und trifft auf den zweiten Faraday-Dreher 10, der die Polarisationsebene des linear polarisierten Lichts um 45° dreht. Der zweite Polarisator 11 ist so eingestellt, daß er für das in dieser Ebene polarisierte Licht durchlässig ist, so daß es ungehindert durch diesen Polarisator 11 hindurch vom einen Faraday-Dreher 6 gelangt, der die Polarisationsebene des zugeführten linear polarisierten Lichts wiederum um 45° dreht, so daß die Polarisationsebene des aus diesem Dreher 6 austretenden Lichts gegenüber der Polarisationsebene des ursprünglichen TE-Modes um 90° gedreht ist. Der eine Polarisator 7 ist so eingestellt, daß er für das in dieser Ebene polarisierte Licht durchlässig ist, so daß es ungehindert durch diesen Polarisator 7 hindurchgeht und zur Faser 8 gelangt, auf dessen Ende 81 es durch die zweite Linse 4 fokussiert wird.

Das von der Faser 8 zurückkommende Licht kann aufgrund einer geringen Doppelbrechung innerhalb der Faser 8 einen beliebigen Polarisationszustand einnehmen, der in zwei zueinander orthogonale Polarisationskomponenten zerlegt werden kann, von denen eine erste Komponente in der Ebene polarisiert ist, die zur Polarisationsebene des ursprünglichen TE-Modes um 90° gedreht ist, und in eine zweite Konponente, die in der zur Polarisationsebene des ursprünglichen TE-Modes schwingt.

Die erste Komponente geht ungehindert durch den einen Polarisator 7 hindurch und gelangt in den einen Faraday-Dreher 6, der die Polarisationsebene dieser ersten Komponente um 45° dreht.

Für die zweite Komponente wirkt der eine Polarisator 7 sperrend, d.h. es gelangt nur ein durch einen niedrigeren Transmissionsgrad $\tau_1$ dieses Polarisators 7 bestimmter geringer Leistungsanteil dieser zweiten Komponente hinter den einen Faraday-Dreher 6, der auch die Polarisationsebene dieses Anteils um 45° dreht. Außerdem wird ein durch das Auslöschungsvermögen $k \ll 1$ des Ferritmaterials des einen Faraday-Drehers 7 bestimmter Leistungsanteil der ersten Komponente in die zur Polarisationsebene dieser Komponente senkrechte Polariationsebene gestreut, so daß zum zweiten Polarisator 11 die in der Lichtleistung um das gestreute Licht geringfügig verminderte erste Komponente mit um 45° gedrehter Polarisationsebene und ein geringer Leistungsanteil der zweiten Komponente gelangt, deren Polarisationsebene senkrecht zu der um 45° gedrehten Polarisationsebene der ersten Komponente ist. Da $\tau_1 < k$ gewählt ist, wird der zum zweiten Polarisator 11 gelangende geringe Leistungsanteil der zweiten Komponente im wesentlichen durch k bestimmt.

Der geringe Leistungsanteil der zweiten Komponente geht ungehindert durch den zweiten Polarisator 1 hindurch und gelangt zum zweiten Faraday-Dreher 10, der die Polarisationsebene dieser Komponente um 45° dreht und der einen durch das Auslöschungsvermögen $k' \ll 1$ seines Ferritmaterials bestimmten Leistungsanteil der zweiten Komponente in die zur Polarisationsebene dieser Komponente senkrechte Ebene streut.

Für die erste Komponente mit um 45° gedrehter Polarisationsebene wirkt der zweite Polarisator 11 sperrend, d.h. es gelangt nur ein durch einen niedrigen Transmissionsgrad $\tau_2$ dieses zweiten Polarisators 11 bestimmter geringer Leistungsanteil dieser ersten Komponente hinter den zweiten Faraday-Dreher 10, der auch die Polarisationsebene dieses Anteils um 45° dreht.

Zur ersten Linse 3 gelangt somit die in der Lichtleistung um das gestreute Licht geringfügig verminderte zweite Komponente, deren Polarisationsebene hinter dem zweiten Faraday-Dreher 10 senkrecht zur Polarisationsebene des ursprünglichen TE-Modes ist und deren geringe Lichtleistung im wesentlichen durch $k \ll 1$ bestimmt ist, sowie ein geringer Leistungsanteil der ersten Komponente, die hinter dem zweiten Faraday-Dreher 10 in der Polarisationsebene des ursprünglichen TE-Modes schwingt. Da $\tau_2 < k \cdot k'$ gewählt ist, wird der zur ersten Linse 3 gelangende Leistungsanteil der ersten Komponente im wesentlichen durch $k \cdot k' \ll k$ bestimmt.

# Ansprüche

1. Optische Anordnung zum rückwirkungsfreien Einkoppeln der von einem Halbleiterlaser (1) divergent abgestrahlten Laserstrahlung in eine optische Faser (8), insbesondere eine Monomodefaser, wobei im Strahlengang der Laserstrahlung eine erste optische Linse (3) und eine in Ausbreitungsrichtung (R) dieser Strahlung hinter der ersten Linse (3) angeordnete zweite optische Linse (4) sowie ein optischer Isolator (5) angeordnet sind, der aus einem Faraday-Dreher (6) und zumindest einem Polarisator (7) besteht, wobei die zweite Linse (4) Bestandteil des Faraday-Drehers (6) ist,
dadurch **gekennzeichnet,**
daß zwischen der ersten Linse (3) und dem einen optischen Isolator (5) ein zweiter optischer Isolator (9) angeordnet ist, der aus einem zweiten Faraday-Dreher (10) und einem zweiten Polarisator (11) mit einer im Vergleich zum einen Polarisator (7) höheren Sperrdämpfung besteht.

2. Anordnung nach Anspruch 1,
dadurch **gekennzeichnet,**
daß in dem zweiten Faraday-Dreher (10) eine dritte optische Linse (12) angeorndet ist.

3. Anordnung nach Anspruch 2,
dadurch **gekennzeichnet,**
daß die dritte Linse (12) eine Plankonvexlinse ist.

4. Anordnung nach einem der vorhergehenden Ansprüche,
dadurch **gekennzeichnet,**
daß der zweite Polarisator (11) aus einem Keil aus doppelbrechendem Material besteht.

FIG 1

FIG 2

FIG 3

11,3mm

# EUROPÄISCHER RECHERCHENBERICHT

<table>
<tr><td colspan="2">Europäisches Patentamt</td><td></td><td>Nummer der Anmeldung</td></tr>
<tr><td colspan="2"></td><td></td><td>**EP 90 11 6405**</td></tr>
</table>

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y,D | EP-A-0 275 068  (SIEMENS)<br>* Spalte 5, Zeile 20 - Spalte 6, Zeile 28; Abbildungen 1,2 *<br>– – – | 1 | G 02 F<br>1/09<br>G 02 B 6/42 |
| Y | PATENT ABSTRACTS OF JAPAN vol. 6, no. 141 (P-131)(1019), 30. Juli 1982;<br>& JP - A - 5762024 (KOUKUU UCHIYUU GIJUTSU KENKY-USHO) 14.04.1982<br>* ganzes Dokument *<br>– – – | 1 | |
| A,D | EUROPEAN CONFERENCE ON OPTICAL COMMUNICA-TION - BARCELONA 1986 Technical Digest, Band II, 1986, Seiten 11-16; M. SHIRASAKI et al.: "Optical Isolator for Single Mode Fiber"<br>* Seite 12, letzter Absatz; Abbildungen 2,9 *<br>– – – – – | 1,4 | |
| | | | **RECHERCHIERTE SACHGEBIETE (Int. Cl.5)**<br><br>H 01 S 3/00<br>G 02 B 6/00<br>G<br>02 F 1/00<br>G 02 B 27/00 |

Der vorliegende Recherchenbericht wurde für alle Patentansprüche erstellt

| Recherchenort | Abschlußdatum der Recherche | Prüfer |
|---|---|---|
| Berlin | 07 Januar 91 | VON MOERS F |